# EUROPEAN PATENT APPLICATION

(11) **EP 4 485 564 A1**
(43) Date of publication of application: **01.01.2025**
(21) Application number: 24185215.1
(22) Date of filing: 28.06.2024
(51) Int. Cl.: H01M 4/133, H01M 4/1393, H01M 4/36, H01M 10/0525, H01M 4/02

(54) **NEGATIVE ELECTRODE AND ELECTROCHEMICAL APPARATUS AND ELECTRONIC APPARATUS USING SAME**

(30) Priority: 30.06.2023 CN 202310791841
(71) Applicant: Ningde Amperex Technology Limited, Zhangwan Town, Jiaocheng District Ningde City Fujian 352100 (CN)
(72) Inventor: YI, Zheng, Ningde City Fujian 352100 (CN); TAN, Fujin, Ningde City Fujian 352100 (CN); SHAO, Wenlong, Ningde City Fujian 352100 (CN); XIE, Yuansen, Ningde City Fujian 352100 (CN)
(74) Representative: Icosa

(57) **Abstract**

A negative electrode includes: a negative electrode current collector and a negative electrode active material layer located on at least one surface of the negative electrode current collector. The negative electrode active material layer includes a negative electrode active material, where the negative electrode active material includes graphite and hard carbon. Based on a total mass of the hard carbon, a ratio of a mass of element hydrogen to a mass of element carbon in the hard carbon is Wi, and based on a total mass of the graphite, a ratio of a mass of element hydrogen to a mass of element carbon in the graphite is W₂, a value of W₁/W₂ being within a range of 5 to 19. The electrochemical apparatus has reduced impedance and improved rate performance and cycling performance.

## Description

### TECHNICAL FIELD

This application relates to the field of energy storage and specifically to a negative electrode and an electrochemical apparatus and electronic apparatus using the same.

### BACKGROUND

Electrochemical apparatuses (for example, lithium-ion batteries) have been widely used in the field of portable consumer electronics due to their advantages such as high volumetric and mass energy densities, environmental friendliness, high operating voltage, small size, light weight, and long cycle life. In recent years, with the rapid development of electric vehicles and mobile electronic devices, increasingly high requirements have been imposed on energy density, safety, cycling performance, and the like of batteries, and the emergence of novel electrochemical apparatuses with comprehensive performance improved comprehensively has been expected. Fast charge and discharge performance and cycling performance have become key technical issues that need to be solved urgently. Improving active materials of electrodes is one of research directions for solving the above issues.

Graphite is the most widely used negative electrode material at present due to its advantages such as high efficiency and stable charge and discharge plateau. However, the performance of the current commercial graphite has been almost developed to the extreme. How fast charge and discharge performance, rate performance, and cycling performance of the current commercial graphite are further improved is one of the main problems. In view of this, it is indeed necessary to provide an improved negative electrode to further improve and solve fast charge performance, rate performance, and cycling performance of current graphite negative electrodes.

### SUMMARY

Some embodiments of this application provide a negative electrode and a preparation method of such negative electrode, in an attempt to solve at least one problem existing in the related field to at least some extent. Some embodiments of this application further provide an electrochemical apparatus and electronic apparatus using such negative electrode.

In an embodiment, this application provides a negative electrode. The negative electrode includes: a negative electrode current collector and a negative electrode active material layer located on at least one surface of the negative electrode current collector, where the negative electrode active material layer includes a negative electrode active material, the negative electrode active material including graphite and hard carbon, where based on a total mass of the hard carbon, a ratio of a mass of element hydrogen to a mass of element carbon in the hard carbon is W₁, and based on a total mass of the graphite, a ratio of a mass of element hydrogen to a mass of element carbon in the graphite is W₂, W₁/W₂ being within a range of 5 to 19.

In some embodiments, a compacted density of the hard carbon is d₁ g/cm³, and a compacted density of the graphite is d₂ g/cm³, d₁/d₂ being within a range of 0.38 to 0.55.

In some embodiments, d₁ is 0.7 to 1.2, and/or d₂ is 1.8 to 2.0.

In some embodiments, W₁/W₂ is within a range of 8 to 18.6.

In some embodiments, W₁/W₂ is within a range of 12 to 18.

In some embodiments, the negative electrode active material has a peak intensity ID at 1300 cm⁻¹ to 1400 cm⁻¹ and a peak intensity IG at 1530 cm⁻¹ to 1630 cm⁻¹, a value of ID/IG being within a range of 0.2 to 0.5.

In some embodiments, the graphite and the hard carbon satisfy at least one of the following conditions:
(1) D₁ᵥ50 of the hard carbon is 0.1 µm to 3 µm;
(2) D₂ᵥ50 of the graphite is 7 µm to 20 µm;
(3) D₂ᵥ50 of the graphite and D₁ᵥ50 of the hard carbon satisfy D₂ᵥ50/D₁ᵥ50 ≥ 4.5;
(4) D₁ᵥ50 of the hard carbon and D₁ᵥ90 of the hard carbon satisfy 1.5 < D₁ᵥ90/D₁ᵥ50 ≤ 6; or
(5) D₂ᵥ50 of the graphite and D₂ᵥ90 of the graphite satisfy D₂ᵥ90/D₂ᵥ50 > 1.5.

In some embodiments, through a particle size test, the negative electrode active material has a peak intensity A within a range of 0.5 µm to 2 µm and a peak intensity B within a range of 8 µm to 17 µm, B/A being not less than 15.

In some embodiments, a specific surface area of the hard carbon is within a range of 5 m²/g to 30 m²/g.

In some embodiments, based on a total mass of the negative electrode active material, a mass percentage of the hard carbon is 1% to 10%.

In another embodiment, this application provides a preparation method of the negative electrode of this application, where the preparation method includes:
(1) preparing hard carbon, where a preparation process of the hard carbon includes:
   (a) taking at least one of glucose or resin as a precursor and heating the precursor to obtain a product;
   (b) calcining the product obtained in step (a) at a temperature of 600°C to 1500°C to obtain a calcined product; and
   (c) coating the calcined product obtained in step (b) with an alkane gas to obtain the hard carbon;
(2) preparing graphite, where a preparation process of the graphite includes:
   heating artificial graphite to a temperature of 500°C to 1000°C under C₂H₂ gas, maintaining that temperature for 1 hour to 5 hours, and cooling it under an inert gas to obtain the graphite; and
(3) preparing the negative electrode by using the hard carbon and the graphite as a negative electrode active material.

In another embodiment, this application provides an electrochemical apparatus including the negative electrode of this application.

In another embodiment, this application provides an electronic apparatus including the electrochemical apparatus according to the foregoing embodiment of this application.

In this application, current distribution of a negative electrode is improved by controlling addition of hard carbon in a graphite negative electrode active material and controlling a ratio of W₁ of the mass of element hydrogen to the mass of element carbon in the hard carbon to W₂ of the mass of element hydrogen to the mass of element carbon in the graphite, thereby improving rate performance and cycling performance of an electrochemical apparatus and reducing impedance of the electrochemical apparatus.

Additional aspects and advantages of these embodiments of this application are partly described and presented in subsequent descriptions, or explained by implementation of these embodiments of this application.

### BRIEF DESCRIPTION OF DRAWINGS

To describe some embodiments of this application, the following briefly describes the accompanying drawings required for describing these embodiments of this application or the prior art. Apparently, the accompanying drawings described below are merely some embodiments of this application. Persons skilled in the art can still derive drawings of other embodiments from structures shown in these accompanying drawings without creative efforts.
FIG. 1 is a scanning electron microscope (SEM) image of a cross section of a negative electrode in Example 6 of this application.
FIG. 2 is a particle size distribution curve of a negative electrode active material in Example 6 of this application.

### DETAILED DESCRIPTION

Some embodiments of this application are described in detail below. Some embodiments of this application should not be construed as limitations on this application.

The term "about" used in this application is intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

In addition, quantities, ratios, and other values are sometimes presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

In specific embodiments and claims, a list of items connected by the terms "one of", "one piece of", "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may include a single element or a plurality of elements. The item B may include a single element or a plurality of elements. The item C may include a single element or a plurality of elements.

In the specific embodiments and claims, an item list connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements.

### I. Electrochemical apparatus

In some embodiments, this application provides an electrochemical apparatus, where the electrochemical apparatus includes a positive electrode, a negative electrode, and an electrolyte.

### 1. Negative electrode

An embodiment of this application provides a negative electrode. The negative electrode includes: a negative electrode current collector and a negative electrode active material layer located on at least one surface of the negative electrode current collector, where the negative electrode active material layer includes a negative electrode active material, the negative electrode active material including graphite and hard carbon, where based on the total mass of the hard carbon, a ratio of a mass of element hydrogen to a mass of element carbon in the hard carbon is W₁, and based on the total mass of the graphite, a ratio of a mass of element hydrogen to a mass of element carbon in the graphite is W₂, W₁/W₂ being within a range of 5 to 19.

Element hydrogen may be included on the inside and surface of a hard carbon particle. Therefore, the ratio W₁ of the mass of element hydrogen to the mass of element carbon in the hard carbon may be within a high range. The graphite has a complete internal crystal structure and a small amount of element hydrogen on the surface. Therefore, the ratio W₂ of the mass of element hydrogen to the mass of element carbon in the graphite is within a low range. A ratio of W₁ to W₂ can reflect the composition of the negative electrode active material, which is related to factors such as a particle size and a specific surface area of the hard carbon in the negative electrode active material, and therefore can be used as a parameter to characterize the negative electrode active material. A larger value of W₁/W₂ indicates a smaller particle size and a larger specific surface area of the hard carbon. When the hard carbon is mixed with the graphite, the two can be mixed evenly, which can average the porosity of the negative electrode and improve the current distribution of the negative electrode, thereby improving rate performance and cycling performance of an electrochemical apparatus. In addition, a smaller particle size of the hard carbon indicates a shorter active ion transport distance, which is also conducive to improving the rate performance of the electrochemical apparatus. An improved current distribution of a negative electrode plate and a shortened active ion transport distance are also conducive to reducing electrochemical impedance and diffusion impedance of a negative electrode side and improving the rate performance of the electrochemical apparatus.

In some embodiments, the value of W₁/W₂ is 5, 6, 7, 8, 9, 10, 11, 12, 13, 14, 15, 16, 17, 18, or 19, or within a range defined by any two of these values. In some embodiments, W₁/W₂ is within a range of 8 to 18.6. In some embodiments, W₁/W₂ is within a range of 12 to 18. The value of W₁/W₂ being in the above ranges can further improve the rate performance of the electrochemical apparatus.

In some embodiments, W₁ is within a range of 0.05 to 0.2. In some embodiments, W₁ is 0.05, 0.07, 0.09, 0.1, 0.12, 0.14, 0.16, 0.18, or 0.2, or within a range defined by any two of these values. W₁ being in the above range can further facilitate transport of active ions and improve the rate performance of the electrochemical apparatus.

In some embodiments, W₂ is within a range of 0.005 to 0.02. In some embodiments, W₂ is 0.005, 0.007, 0.009, 0.01, 0.012, 0.014, 0.016, 0.018, or 0.02, or within a range defined by any two of these values. In some embodiments, the hard carbon of this application is prepared using the following preparation method:
(1) providing at least one of a glucose solution or resin as a precursor and heating the precursor;
(2) carbonizing a product obtained in step (1) at a temperature of 600°C to 1500°C; and
(3) carrying out gas-phase coating on a carbonized product obtained in step (2) by using an alkane gas.

In some embodiments, the graphite of this application is prepared using the following preparation method, where the preparation method includes:
heating commercially available artificial graphite to a temperature of 500°C to 1000°C in a rotary furnace under a 10% C₂H₂ gas, maintaining that temperature for 1 hour to 5 hours then replacing the gas with a N₂ gas, and naturally cooling it to obtain a final graphite material.

It is understood by persons skilled in the art that the ratios of the mass of element hydrogen to the mass of element carbon in the hard carbon and/or the graphite can be controlled by adjusting the preparation conditions (for example, reaction time and temperature).

In some embodiments, the compacted density of the hard carbon is d₁ g/cm³, and the compacted density of the graphite is d₂ g/cm³, d₁/d₂ being within a range of 0.38 to 0.55.

In some embodiments, the value of d₁/d₂ is 0.38, 0.4, 0.42, 0.44, 0.46, 0.48, 0.5, 0.52, 0.54, or 0.55, or within a range defined by any two of these values. The compacted density of the hard carbon or graphite can reflect a particle size of the material. When the compacted densities of the hard carbon and the graphite meet the above conditions, the hard carbon and the graphite have appropriate particle sizes, and the hard carbon can be evenly dispersed in gaps of the graphite, thus further improving the rate performance and cycling performance of the electrochemical apparatus and reducing impedance of the electrochemical apparatus.

In some embodiments, d₁ is 0.7 to 1.2. In some embodiments, d₁ is 0.7, 0.8, 0.9, 1.0, or 1.2, or within a range defined by any two of these values. When the compacted density of the hard carbon meets the above condition, the rate performance and cycling performance of the electrochemical apparatus can be further improved.

In some embodiments, d₂ is 1.8 to 2.0. In some embodiments, d₂ is 1.8, 1.85, 1.9, 1.95, or 2.0, or within a range defined by any two of these values. When the compacted density of the graphite meets the above condition, the rate performance and cycling performance of the electrochemical apparatus can be further improved.

In some embodiments, the negative electrode active material has a first characteristic peak with a peak intensity ID at 1300 cm⁻¹ to 1400 cm⁻¹ and a second characteristic peak with a peak intensity IG at 1530 cm⁻¹ to 1630 cm⁻¹, a value of ID/IG being within a range of 0.2 to 0.5. In some embodiments, the value of ID/IG is 0.2, 0.3, 0.4, or 0.5, or within a range defined by any two of these values. The value of ID/IG can reflect the defect degree of the negative electrode active material. The first characteristic peak mainly comes from more disordered hard carbon. Therefore, the hard carbon added can increase the value of ID/IG of the negative electrode plate. A smaller particle size of the hard carbon allows for more uniform distribution of the hard carbon in the graphite. When the value of ID/IG is within the foregoing range, the hard carbon and the graphite have better synergistic effects, for example, increasing current density at the electrode plate level during uniform charging and discharging and improving the rate performance of the electrochemical apparatus.

In some embodiments, D₁ᵥ50 of the hard carbon is 0.1 µm to 3 µm. In some embodiments, D₁ᵥ50 is 0.1 µm, 0.5 µm, 1 µm, 1.5 µm, 2 µm, 2.5 µm, or 3 µm, or within a range defined by any two of these values.

In some embodiments, D₂ᵥ50 of the graphite is 7 µm to 20 µm. In some embodiments, D₂ᵥ50 is 7 µm, 9 µm, 11 µm, 13 µm, 15 µm, 17 µm, 19 µm, or 20 µm, or within a range defined by any two of these values.

In some embodiments, D₂ᵥ50 of the graphite and D₁ᵥ50 of the hard carbon satisfy D₂ᵥ50/D₁ᵥ50 ≥ 4.5. In some embodiments, D₂ᵥ50/D₁ᵥ50 is 4.5 to 15. In some embodiments, D₂ᵥ50/D₁ᵥ50 is 4.5, 5, 7, 9, 11, 13, or 15, or within a range defined by any two of these values.

In some embodiments, D₁ᵥ50 of the hard carbon and D₁ᵥ90 of the hard carbon satisfy 1.5 < D₁ᵥ90/D₁ᵥ50 < 6. In some embodiments, D₁ᵥ90/D₁ᵥ50 is 1.6, 2, 3, 4, 5, or 6, or within a range defined by any two of these values.

In some embodiments, D₂ᵥ50 of the graphite and D₂ᵥ90 of the graphite satisfy D₂ᵥ90/D₂ᵥ50 > 1.5. In some embodiments, D₂ᵥ90/D₂ᵥ50 is 1.6 to 10. In some embodiments, D₂ᵥ90/D₂ᵥ50 is 1.6, 2, 3, 4, 5, 6, 7, 8, 9, or 10, or within a range defined by any two of these values.

When the particle sizes of the hard carbon and the graphite meet the above conditions, the particle sizes of the hard carbon and the graphite are properly matched, and the hard carbon can be evenly dispersed in gaps of the graphite, thus further improving the rate performance and cycling performance of the electrochemical apparatus and reducing the impedance of the electrochemical apparatus.

In some embodiments, through a particle size test, the negative electrode active material has a peak intensity A within a range of 0.5 µm to 2 µm and a peak intensity B within a range of 8 µm to 17 µm, B/A being not less than 15.

In some embodiments, a value of B/A is 15 to 100. In some embodiments, the value of B/A is 15, 20, 25, 30, 35, 40, 45, 50, 55, 60, 65, 70, 75, 80, 85, 90, or 100, or within a range defined by any two of these values. In some embodiments, a value of the peak intensity A is 0.4 to 0.8. In some embodiments, the value of the peak intensity A is 0.4, 0.5, 0.6, 0.7, or 0.8, or within a range defined by any two of these values.

In some embodiments, a value of the peak intensity B is 6 to 12. In some embodiments, the value of the peak intensity B is 6, 7, 8, 9, 10, 11, or 12, or within a range defined by any two of these values.

The peak intensities A and B of the negative electrode active material meeting the above conditions is conducive to further improving the rate performance and cycling performance of the electrochemical apparatus and reducing the impedance of the electrochemical apparatus.

In some embodiments, a specific surface area of the hard carbon is within a range of 5 m²/g to 30 m²/g. In some embodiments, the specific surface area of the hard carbon is 5 m²/g, 8 m²/g, 10 m²/g, 12 m²/g, 15 m²/g, 18 m²/g, 20 m²/g, 23 m²/g, 25 m²/g, 28 m²/g, or 30 m²/g, or within a range defined by any two of these values.

In some embodiments, a specific surface area of the graphite is within a range of 0.5 m²/g to 2 m²/g. In some embodiments, the specific surface area of the graphite is 0.5 m²/g, 0.8 m²/g, 1 m²/g, 1.2 m²/g, 1.5 m²/g, 1.8 m²/g, or 2 m²/g, or within a range defined by any two of these values.

The specific surface areas of the hard carbon and the graphite meeting the above conditions is conducive to further improving the rate performance and cycling performance of the electrochemical apparatus and reducing the impedance of the electrochemical apparatus.

In some embodiments, based on the total mass of the negative electrode active material, a mass percentage of the hard carbon is 1% to 10%. In some embodiments, based on the total mass of the negative electrode active material, the mass percentage of the hard carbon is 1%, 2%, 3%, 4%, 5%, 6%, 7%, 8%, 9%, or 10%, or within a range defined by any two of these values.

In some embodiments, based on the total mass of the negative electrode active material, a mass percentage of the graphite is 90% to 99%. In some embodiments, based on the total mass of the negative electrode active material, the mass percentage of the graphite is 90%, 91%, 92%, 93%, 94%, 95%, 96%, 97%, 98%, or 99%, or within a range defined by any two of these values.

The percentages of the hard carbon and the graphite in the negative electrode active material meeting the above conditions is conducive to further improving the rate performance and cycling performance of the electrochemical apparatus and reducing the impedance of the electrochemical apparatus.

In some embodiments, this application provides a preparation method of hard carbon, where the preparation method includes the following steps.
(1) Take at least one of glucose or resin as a precursor and heat the precursor to obtain a product.
(2) Calcine the product obtained in step (1) at a temperature of 600°C to 1500°C to obtain a calcined product.
(3) Coat the calcined product obtained in step (2) by using an alkane gas.

In some embodiments, the heating temperature in step (1) is 150°C to 500 °C. In some embodiments, the heating temperature in step (1) is 150°C, 200°C, 250°C, 300°C, 350°C, 400°C, 450°C, or 500°C, or within a range defined by any two of these values.

In some embodiments, the heating time in step (1) is 3 hours to 30 hours. In some embodiments, the heating time in step (1) is 3 hours, 4 hours, 6 hours, 10 hours, 15 hours, 20 hours, 23 hours, 25 hours, or 30 hours, or within a range defined by any two of these values.

In some embodiments, the calcining temperature in step (2) is 600°C, 680°C, 1000°C, 1200°C, 1300°C, 1400°C, or 1500°C, or within a range defined by any two of these values.

In some embodiments, the calcining time in step (2) is 1 hour to 5 hours. In some embodiments, the calcining time in step (2) is 1 hour, 2 hours, 3 hours, 4 hours, or 5 hours, or within a range defined by any two of these values.

In some embodiments, the alkane gas includes C₂H₂.

In some embodiments, the coating in step (3) is carried out at a temperature of 500°C to 1000°C. In some embodiments, the coating temperature in step (3) is 500°C, 600°C, 700°C, 800°C, 900°C, or 1000°C, or within a range defined by any two of these values.

In some embodiments, the coating time in step (3) is 2 hours to 10 hours. In some embodiments, the coating time in step (3) is 2 hours, 3 hours, 4 hours, 5 hours, 6 hours, 7 hours, 8 hours, 9 hours, or 10 hours, or within a range defined by any two of these values.

In some embodiments, this application provides a preparation method of graphite, where the preparation method includes:

heating artificial graphite to a temperature of 500°C to 1000°C under C₂H₂ gas, maintaining that temperature for 1 hour to 5 hours, and cooling it under an inert gas to obtain the graphite.

In some embodiments, the heating temperature is 500°C, 600°C, 700°C, 800°C, 900°C, or 1000°C, or within a range defined by any two of these values.

In some embodiments, the heating time is 1 hour, 2 hours, 3 hours, 4 hours, or 5 hours, or within a range defined by any two of these values.

In some embodiments, this application provides a preparation method of negative electrode, where the preparation method includes preparing a negative electrode by using the hard carbon and the graphite prepared in the foregoing methods as a negative electrode active material. In some embodiments, the negative electrode active material layer includes a binder. In some embodiments, the binder includes but is not limited to polyvinyl alcohol, carboxymethyl cellulose, hydroxypropyl cellulose, diacetyl cellulose, polyvinyl chloride, carboxylated polyvinyl chloride, polyvinyl fluoride, ethylene oxide containing polymer, polyvinylpyrrolidone, polyurethane, polytetrafluoroethylene, polyvinylidene fluoride, polyethylene, polypropylene, styrene-butadiene rubber, acrylic styrene-butadiene rubber, epoxy resin, or nylon.

In some embodiments, the negative electrode active material layer includes a conductive material. In some embodiments, the conductive material includes but is not limited to natural graphite, artificial graphite, carbon black, acetylene black, Ketjen black, carbon fiber, metal powder, metal fiber, copper, nickel, aluminum, silver, or polyphenylene derivatives.

In some embodiments, the current collector includes but is not limited to a copper foil, a nickel foil, a stainless steel foil, a titanium foil, foamed nickel, foamed copper, or a polymer substrate coated with conductive metal.

In some embodiments, the negative electrode plate may be obtained using the following method: mixing the active material, the conductive material and the binder in a solvent to prepare an active material composition, and applying the active material composition on the current collector.

In some embodiments, the solvent may include but is not limited to N-methylpyrrolidone.

### 2. Positive electrode

Materials, components, and manufacturing methods of the positive electrode which can be used in some embodiments of this application include any technology disclosed in the prior art. In some embodiments, the positive electrode is the positive electrode recorded in US patent application US9812739B, which is incorporated into this application by reference in its entirety.

In some embodiments, the positive electrode includes a current collector and a positive electrode active material layer located on the current collector.

In some embodiments, the positive electrode active material includes but is not limited to lithium cobalt oxide (LiCoO₂), a lithium nickel cobalt manganese (NCM) ternary material, lithium iron phosphate (LiFePO₄), or lithium manganate (LiMn₂O₄).

In some embodiments, the positive electrode active material layer further includes a binder, and optionally includes a conductive material. The binder enhances binding between particles of the positive electrode active material, and binding between the positive electrode active material and the current collector.

In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylic styrene-butadiene rubber, epoxy resin, or nylon.

In some embodiments, the conductive material includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may include but is not limited to aluminum.

The positive electrode can be prepared using a well-known preparation method in the art. For example, the positive electrode can be obtained using the following method: mixing an active material, the conductive material, and the binder in a solvent to prepare an active material composition, and applying the active material composition on the current collector. In some embodiments, the solvent may include but is not limited to N-methylpyrrolidone.

### 3. Electrolyte

The electrolyte that can be used in some embodiments of this application may be an electrolyte known in the prior art.

In some embodiments, the electrolyte includes an organic solvent, a lithium salt, and an additive. The organic solvent of the electrolyte according to this application may be any organic solvent known in the prior art which can be used as a solvent of the electrolyte. An electrolytic salt used in the electrolyte according to this application is not limited, and may be any electrolytic salt known in the prior art. The additive of the electrolyte according to this application may be any additive known in the prior art which can be used as an additive of the electrolyte.

In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of an organic lithium salt or an inorganic lithium salt.

In some embodiments, the lithium salt includes but is not limited to lithium hexafluorophosphate (LiPF₆), lithium tetrafluoroborate (LiBF₄), lithium difluorophosphate (LiPO₂F₂), lithium bistrifluoromethane sulfonimide LiN(CF₃SO₂)₂ (LiTFSI), lithium bis(fluorosulfonyl)imide Li(N(SO₂F)₂) (LiFSI), lithium bisoxalate borate LiB(C₂O₄)₂ (LiBOB), or lithium difluoro(oxalato)borate LiBF₂(C₂O₄) (LiDFOB).

In some embodiments, a concentration of the lithium salt in the electrolyte is about 0.5 mol/L to 3 mol/L, about 0.5 mol/L to 2 mol/L, or about 0.8 mol/L to 1.5 mol/L.

### 4. Separator

In some embodiments, a separator is provided between the positive electrode plate and the negative electrode plate to prevent a short circuit. A material and shape of the separator that can be used in some embodiments of this application is not specifically limited, and any technology disclosed in the prior art may be used for the separator. In some embodiments, the separator includes a polymer or an inorganic substance formed by a material stable to the electrolyte of this application.

For example, the separator may include a substrate layer and a surface treatment layer. The substrate layer is a non-woven fabric, film, or composite film having a porous structure, and a material of the substrate layer is at least one selected from polyethylene, polypropylene, polyethylene terephthalate, and polyimide. Specifically, a polypropylene porous film, a polyethylene porous film, a polypropylene non-woven fabric, a polyethylene non-woven fabric, or a polypropylene-polyethylene-polypropylene porous composite film may be selected.

The surface treatment layer is provided on at least one surface of the substrate layer, and the surface treatment layer may be a polymer layer or an inorganic layer, or may be a layer formed by mixing a polymer and an inorganic substance.

The inorganic layer includes inorganic particles and a binder. The inorganic particles are one or a combination of several selected from aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is one or a combination of several selected from polyvinylidene fluoride, a vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, and polyhexafluoropropylene.

The polymer layer includes a polymer, and a material of the polymer is at least one selected from polyamide, polyacrylonitrile, an acrylate polymer, polyacrylic acid, polyacrylate salt, polyvinylpyrrolidone, polyvinyl ether, polyvinylidene fluoride, or poly(vinylidene fluoride-hexafluoropropylene).

### 5. Electrochemical apparatus

This application provides an electrochemical apparatus including the negative electrode of this application. In some embodiments, a capacity of the electrochemical apparatus at 25°C is denoted as V1, and a capacity of the electrochemical apparatus at 45°C is denoted as V2, V1/V2 being within a range of 0.985 to 1.

In some embodiments, V1/V2 is 0.985, 0.986, 0.987, 0.988, 0.989, 0.992, 0.994, 0.996, 0.998, or 1, or within a range defined by any two of these values.

In some embodiments, the electrochemical apparatus of this application includes but is not limited to all types of primary batteries, secondary batteries, fuel batteries, solar batteries, or capacitors.

In some embodiments, the electrochemical apparatus is a lithium secondary battery.

In some embodiments, the lithium secondary battery includes but is not limited to a lithium metal secondary battery, a lithium-ion secondary battery, a lithium polymer secondary battery, or a lithium-ion polymer secondary battery.

### 6. Electronic apparatus

This application provides an electronic apparatus including the electrochemical apparatus according to some embodiments of this application.

In some embodiments, the electronic apparatus includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a storage card, a portable recorder, a radio, a backup power supply, a motor, an automobile, a motorcycle, a motor bicycle, a bicycle, a lighting apparatus, a toy, a game console, a clock, an electric tool, a flashlight, a camera, a large household storage battery, or a lithium-ion capacitor.

The following uses a lithium-ion battery as an example and describes preparation of a lithium-ion battery with reference to specific examples. It will be understood by persons skilled in the art that the preparation method described in this application is only an example, and that all other suitable preparation methods fall within the scope of this application.

### Examples

The following describes performance evaluation performed based on examples and comparative examples of the lithium-ion battery in this application.

### I. Preparation of lithium-ion battery

### 1. Preparation of negative electrode

### A. A hard carbon material was prepared using the following method.

(1) A glucose solution with a specified concentration was prepared, 700 mL glucose solution was added into a 1 L reactor, and hydrothermal reaction was carried out after the reactor was sealed, with hydrothermal reaction conditions of heating to a temperature of 180°C to 330°C, maintaining that temperature for 5 hours, and then naturally cooling it to 25°C.
(2) A material obtained in step (1) was filtered and dried to obtain brownish black powder, and then the brownish black powder was put into a rotary furnace protected by a N₂ gas for carbonization for 2 hours at a carbonization temperature of 1000°C.
(3) The carbonized powder was cooled from 1000°C to 700°C as required, the gas was replaced with a 10% C₂H₂ gas, this condition was maintained for 5 hours, then the gas was replaced with a N₂ gas, and the resulting product was naturally cooled to obtain a final hard carbon material.

The parameters involved in the foregoing preparation steps are shown in Table 1.

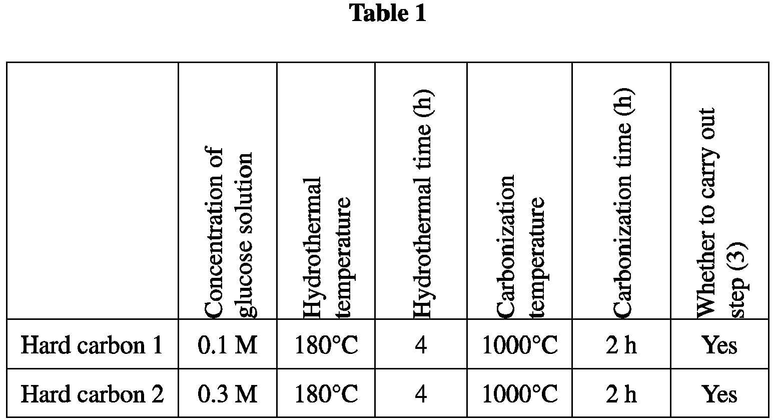

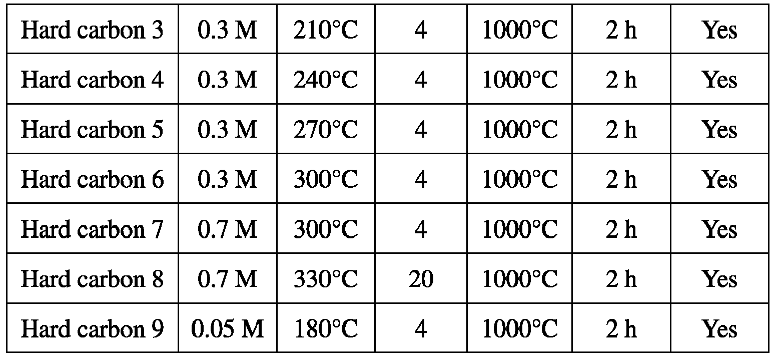

### B. A graphite material was prepared using the following method:

Commercially available artificial graphite was heated to 700°C in a rotary furnace in a 10% C₂H₂ gas, this condition was maintained for a certain period of time, then the gas was replaced with a N₂ gas, and the resulting product was naturally cooled to obtain a final graphite material. Specific preparation parameters are shown in Table 2.

**Table 2**

| | Maintaining time (h) |
|---|---|
| Graphite 1 | 1 |
| Graphite 2 | 2 |
| Graphite 3 | 3 |

C. A negative electrode active material (a graphite material, or both a graphite material and a hard carbon material), styrene-butadiene rubber (SBR), and sodium carboxymethyl cellulose (CMC) were well stirred and mixed at a weight ratio of 97:2:1 in an appropriate amount of deionized water to form a uniform negative electrode slurry, where the negative electrode slurry has a solid content of 40wt%. The slurry was applied on a negative electrode current collector (copper foil), and the copper foil was dried at 85°C. Then after cold pressing, cutting, and slitting, drying was performed in vacuum at 120°C for 12 hours to obtain a negative electrode.

Percentages of the hard carbon and the graphite in the negative electrode active material are shown in Table 3 and Table 5. "3% hard carbon 1 + graphite 1" in Example 1 of Table 3 means that based on the total mass of the negative electrode active material, a mass percentage of the hard carbon 1 is 3%, and the graphite 1 accounts for the remaining 97%. Percentages of the hard carbon and the graphite in other examples and comparative examples are recorded in Table 3 and Table 5 in the same manner.

### 2. Preparation of positive electrode

A positive electrode active substance lithium cobalt oxide (LiCoO₂), a conductive agent Super P, and a binder polyvinylidene fluoride (PVDF) were well stirred and mixed at a weight ratio of 97:1.4:1.6 in an appropriate amount of N-methylpyrrolidone (NMP) solvent to form a uniform positive electrode slurry, where the positive electrode slurry has a solid content of 72wt%. The slurry was applied on a positive electrode current collector aluminum foil, and the copper foil was dried at 85°C. Then after cold pressing, cutting, and slitting, drying was performed in vacuum at 85°C for 4 hours to obtain a positive electrode.

### 3. Preparation of electrolyte

In a dry argon atmosphere glove box, ethylene carbonate (EC), ethyl methyl carbonate (EMC), and diethyl carbonate (DEC) were mixed at a mass ratio of EC:EMC:DEC = 30:50:20, and a lithium salt LiPF₆ was then added. The resulting mixture was mixed to uniformity to obtain an electrolyte, where based on mass of the electrolyte, a mass percentage of LiPF₆ was 12.5%.

### 4. Preparation of separator

A porous polyethylene (PE) polymer film with a thickness of 7 µm was used as the separator.

### 5. Preparation of lithium-ion battery

The positive electrode, the separator, and the negative electrode were sequentially stacked, so that the separator was located between the positive electrode and the negative electrode for separation. Then the resulting stack was wound and welded with tabs, and then placed in an outer packaging aluminum foil film. Then the electrolyte was injected, and processes such as vacuum packaging, standing, formation, shaping and the capacity testing were performed to obtain a pouch lithium-ion battery.

### II. Lithium-ion battery performance test methods

### 1. Test method of value of H/C of negative electrode active material

The value of H/C was defined by a ratio of a mass of H to a mass of C in a hard carbon material or graphite material. H and C were tested using an element analyzer, and a test instrument was a UNICUBE element analyzer. The hard carbon material or the graphite material was fully combusted in a high-purity oxygen environment, and then molar amounts of H₂O and CO₂ were tested, to obtain the value of H/C.

A ratio H/C of the mass of element hydrogen to the mass of element carbon in the hard carbon material was denoted as W₁, and a ratio H/C of the mass of element hydrogen to the mass of element carbon in the graphite material was denoted as W₂.

### 2. Test method of value of ID/IG of negative electrode active material

A negative electrode plate was cut using an ion polishing method to create a cross section, then the cross section was placed on a test platform of a Raman spectrometer, and testing was performed after focusing. During testing, a range of 200 µm × 500 µm was selected, and more than 200 points were tested at equal intervals in this range, where a testing range of each point was between 1000 cm⁻¹ to 2000 cm⁻¹, a peak at 1320 cm⁻¹ to 1370 cm⁻¹ was denoted as peak D, with a peak intensity ID, and a peak at 1570 cm⁻¹ to 1620 cm⁻¹ was denoted as peak G, with a peak intensity IG. Then an intensity ratio of ID/IG at each point was calculated, and an average value was calculated. Testing was performed to obtain the value of ID/IG in the negative electrode active material.

### 3. Specific surface area (BET) test of graphite and hard carbon materials

For a specific surface area test method, reference was made to GB/T 19587-2017. A specific process was as follows: 1 g to 8 g of a hard carbon material or graphite material sample was weighed (the weighed sample at least exceeded 1/3 of the volume of a sphere), then the weighed sample was placed in a 1/2-inch tube with a sphere (a tube diameter of a sphere portion was 12 mm), and pretreatment was performed on the sample at 200°C for 2 h. Then the resulting product was placed in a testing device TriStar3030 (made by Micromeritics in USA) for testing, where an adsorption gas used here was N₂ (with a purity of 99.999%), the testing was performed at 77K. The specific surface area was tested and calculated based on the Brunauer-Emmett-Teller adsorption theory and its formula (BET).

### 4. Particle size test:

About 0.02 g of a negative electrode active material sample was added into a 50 ml clean beaker, and about 20 ml of deionized water was added into the breaker, with 2 and 3 drops of surfactant (1%) added to make the sample completely dispersed in the water. Then the sample was subjected to ultrasound for 5 minutes in a 120 W ultrasonic cleaning machine, and the particle size distribution was tested with a MasterSizer 2000.

### 5. Test method of peak intensity A and peak intensity B

A fully discharged negative electrode plate was washed with a DMC solution and then dried. The negative electrode active material was gently scraped off the current collector and then washed with ethanol for 5 times, followed by centrifugal drying. Then particle size test was performed using the foregoing particle size test method to obtain a distribution curve of peak intensity versus particle size. A peak within a range of 0.1 µm to 5 µm was denoted as peak A, a peak within a range of 5 µm to 25 µm was denoted as peak B, intensities of peak A and peak B were read, and a ratio of the intensities of peak A and peak B was calculated.

### 6. Test method of the compacted density

The compacted density was tested in accordance with the national standard GB/T 24533-2009 Graphite Negative Electrode Materials for Lithium-Ion Batteries. A test instrument was a SUNS UTM7305 tester. During testing, about 1 g of a graphite or hard carbon sample was placed in a mold of the instrument, then a specified pressure (1 t to 5 t) was set, and thicknesses of the sample under different pressures were recorded by the instrument to obtain volumes of the sample under different pressures. Then the compacted density of the sample was calculated using a formula ρ = m/V. Here, the compacted density of the hard carbon was d₁, and the compacted density of the graphite was d₂, both of which were compacted densities under a pressure of 3 t.

### 7. Test method of impedance

After a lithium-ion battery (an electrochemical apparatus) was discharged to 3.0 V, that is, a 0% SOC state, its direct current impedance, that is, 0% SOC impedance, was tested.

### 8. Test method of rate performance

The lithium-ion battery was charged at a rate at a constant temperature. The fully discharged lithium-ion battery was first charged to 4.48 V at a constant current of 1C and charged to 0.05C at a constant voltage, and then discharged to 3.0 V at a constant current of 1C, where a discharge capacity obtained at this point was denoted as a capacity A. Then the lithium-ion battery was charged to 4.48 V at a constant current of 5C and charged to 0.05C at a constant voltage, and then discharged to 3.0 V at a constant current of 1C, where a discharge capacity obtained at this point was denoted as a capacity B. B/A represented 5C/1C rate performance.

### 9. Test method of retention rate performance at low temperature of - 20°C/25°C

The lithium-ion battery was subjected to charge and discharge test at different temperatures. The fully discharged lithium-ion battery was first charged to 4.48V at a constant current of 1C at a room temperature of 25°C, charged to 0.05C at a constant voltage, and then discharged to 3.0 V at a constant current of 1C, where a discharge capacity obtained at this point was denoted as a capacity C. Then the lithium-ion battery was charged to 4.48 V at a constant current of 1C and charged to 0.05C at a constant voltage, and then transferred to a thermostat at -20°C, left standing for 8 h, and then discharged to 3.0 V at a constant current of 1C, where a discharge capacity obtained at this point was denoted as a capacity D. D/C was denoted as a retention rate at a low temperature of -20°C/25°C.

### 10. Test method of cycling performance at room temperature

At 25°C, the fully discharged lithium-ion battery was charged to a voltage of 4.48 V at a constant current of 3C, then charged to 0.05C at a constant voltage, and then discharged to 3 V at a constant current of 1C. This process was denoted as one cycle, and a discharge capacity E at the first cycle was recorded. After 800 cycles were performed, a discharge capacity F at the 800th cycle was recorded. A value of F/E was denoted as a cycling retention rate at 25°C.

### 11. Test method of cycling performance at high temperature

At 45°C, the fully discharged lithium-ion battery was charged to a voltage of 4.48 V at a constant current of 3C, then charged to 0.05C at a constant voltage, and then discharged to 3 V at a constant current of 1C. This process was denoted as one cycle, and a discharge capacity G at the first cycle was recorded. After 800 cycles were performed, a discharge capacity H at the 800th cycle was recorded. A value of H/G was denoted as a cycling retention rate at 45°C.

### 12. Test method of V1 and V2

The lithium-ion battery was subjected to charge and discharge test at different temperatures. The fully discharged lithium-ion battery was first charged to 4.48 V at a constant current of 1C at a room temperature of 25°C, charged to 0.05C at a constant voltage, and then discharged to 3.0 V at a constant current of 1C, where a discharge capacity obtained at this point was denoted as a capacity V1. Then the lithium-ion battery was transferred to a thermostat at 45°C, left standing for 8 h, then charged to 4.48 V at a constant current of 1C, charged to 0.05C at a constant voltage, and discharged to 3.0 V at a constant current of 1C. A discharge capacity obtained at this point was denoted as a capacity V2, and a value of V2/V1 was calculated.

### III. Performance test results of lithium-ion batteries

Related parameters of the hard carbon, graphite, and lithium-ion batteries in examples and comparative examples are shown in Table 3 and Table 4. Performance of the lithium-ion batteries in examples and comparative examples is shown in Table 5.

**Table 3**

| | Percentages of hard carbon and graphite | W₁/W₂ | W₁ | W2 | Compacted density d₁ of hard carbon (g/cm³) | Compacted density d₂ of graphite (g/cm³) | d₁/d₂ | ID/IG | D₁ᵥ50 of hard carbon (µm) | D₂ᵥ50 of graphite (µm) |
|---|---|---|---|---|---|---|---|---|---|---|
| Example 1 | 3% hard carbon 1 + graphite 1 | 18.57 | 0.13 | 0.007 | 0.73 | 1.9 | 0.38 | 0.47 | 0.1 | 15 |
| Example 2 | 3% hard carbon 2 + graphite 1 | 17.14 | 0.12 | 0.007 | 0.8 | 1.9 | 0.42 | 0.39 | 0.3 | 15 |
| Example 3 | 3% hard carbon 3 + graphite 1 | 14.29 | 0.1 | 0.007 | 0.81 | 1.9 | 0.43 | 0.33 | 0.5 | 15 |
| Example 4 | 3% hard carbon 4 + graphite 1 | 12.86 | 0.09 | 0.007 | 0.85 | 1.9 | 0.45 | 0.31 | 0.8 | 15 |
| Example 5 | 3% hard carbon 5 + graphite 1 | 11.43 | 0.08 | 0.007 | 0.88 | 1.9 | 0.46 | 0.3 | 1 | 15 |
| Example 6 | 3% hard carbon 6 + graphite 1 | 10 | 0.07 | 0.007 | 0.93 | 1.9 | 0.49 | 0.27 | 1.4 | 15 |
| Example 7 | 3% hard carbon 7 + graphite 1 | 10 | 0.07 | 0.007 | 1.06 | 1.9 | 0.56 | 0.24 | 3 | 15 |
| Example 8 | 3% hard carbon 5 + graphite 2 | 8 | 0.08 | 0.01 | 0.88 | 1.86 | 0.47 | 0.3 | 1 | 14 |
| Example 9 | 3% hard carbon 7 + graphite 2 | 7 | 0.07 | 0.01 | 1 | 1.86 | 0.54 | 0.26 | 3 | 14 |
| Example 10 | 3% hard carbon 5 + graphite 3 | 6.15 | 0.08 | 0.013 | 0.88 | 1.84 | 0.48 | 0.32 | 1 | 16 |
| Example 11 | 3% hard carbon 7 + graphite 3 | 5.38 | 0.07 | 0.013 | 1 | 1.84 | 0.54 | 0.27 | 3 | 16 |
| Comparative Example 1 | 100% graphite 1 | / | / | 0.007 | / | 1.9 | / | 0.2 | / | 15 |
| Comparative Example 2 | 100% graphite 2 | / | / | 0.01 | / | 1.9 | / | 0.2 | / | 14 |
| Comparative Example 3 | 100% graphite 3 | / | / | 0.013 | / | 1.9 | / | 0.2 | / | 16 |
| Comparative Example 4 | 3% hard carbon 9 + graphite 1 | 21.4 | 0.15 | 0.007 | 0.71 | 1.9 | 0.37 | 0.52 | 0.05 | 15 |
| Comparative Example 5 | 3% hard carbon 8 + graphite 2 | 4.9 | 0.049 | 0.01 | 1.05 | 1.86 | 0.57 | 0.23 | 5 | 14 |

| | | | | | | | | | | |
|---|---|---|---|---|---|---|---|---|---|---|
| "/" means that the parameter is not applicable. | | | | | | | | | | |

**Table 4**

| | D₁ᵥ90 of hard carbon (µm) | D₂ᵥ90 of graphite (µm) | D₁ᵥ90/D₁ᵥ50 | D₂ᵥ90/D₂ᵥ50 | D₂ᵥ50/D₁ᵥ50 | Hard carbon BET (m²/g) | Graphite BET (m²/g) | Intensity of peak A | Intensity of peak B | Intensity of peak B/intensity of peak A |
|---|---|---|---|---|---|---|---|---|---|---|
| Example 1 | 0.6 | 28 | 6 | 1.87 | 150 | 25 | 1.2 | 0.56 | 9.18 | 16.4 |
| Example 2 | 0.8 | 28 | 2.67 | 1.87 | 50 | 23 | 1.2 | 0.55 | 9.19 | 16.7 |
| Example 3 | 1.3 | 28 | 2.6 | 1.87 | 30 | 19 | 1.2 | 0.52 | 9.22 | 17.7 |
| Example 4 | 1.6 | 28 | 2 | 1.87 | 18.75 | 16 | 1.2 | 0.52 | 9.23 | 17.8 |
| Example 5 | 1.8 | 28 | 1.8 | 1.87 | 15 | 15 | 1.2 | 0.49 | 9.23 | 18.8 |
| Example 6 | 2.2 | 28 | 1.57 | 1.87 | 10.71 | 10 | 1.2 | 0.47 | 9.26 | 19.7 |
| Example 7 | 6 | 28 | 2 | 1.87 | 5 | 7 | 1.2 | 0.43 | 9.29 | 21.6 |
| Example 8 | 1.8 | 30 | 1.8 | 2.14 | 14 | 15 | 1.3 | 0.53 | 9.17 | 17.3 |
| Example 9 | 6 | 30 | 2 | 2.14 | 4.67 | 7 | 1.3 | 0.48 | 9.09 | 18.9 |
| Example 10 | 1.8 | 33 | 1.8 | 2.06 | 16 | 15 | 1.3 | 0.51 | 9.15 | 17.9 |
| Example 11 | 6 | 33 | 2 | 2.06 | 5.33 | 7 | 1.3 | 0.45 | 9.07 | 20.2 |
| Comparative Example 1 | / | / | / | / | / | / | 1.2 | / | 9.56 | / |
| Comparative Example 2 | / | / | / | / | / | / | 1.2 | / | 9.67 | / |
| Comparative Example 3 | / | / | / | / | / | / | 1.3 | / | 9.78 | / |
| Comparative Example 4 | 0.5 | 28 | 10 | 1.87 | 300 | 29 | 1.2 | / | 9.20 | / |
| Comparative Example 5 | 7.7 | 28 | 1.54 | 2 | 2.8 | 5 | 1.2 | 0.46 | 9.21 | 20 |

| | | | | | | | | | | |
|---|---|---|---|---|---|---|---|---|---|---|
| "/" means that the parameter is not applicable. | | | | | | | | | | |

**Table 5**

| | Impedance (mΩ) | Rate 5C/1C | Retention rate at low temperature of -20°C/25°C | Cycling retention rate at 45°C | Cycling retention rate at 25°C | V1 (mAh) | V2 (mAh) | V1/V 2 |
|---|---|---|---|---|---|---|---|---|
| Example 1 | 80 | 85% | 75% | 76% | 90% | 5002 | 5053 | 0.990 |
| Example 2 | 79 | 86% | 77% | 78% | 91% | 4999 | 5055 | 0.989 |
| Example 3 | 83 | 85% | 76% | 77% | 91% | 4993 | 5054 | 0.988 |
| Example 4 | 86 | 85% | 75% | 77% | 90% | 5100 | 5167 | 0.987 |
| Example 5 | 88 | 84% | 74% | 75% | 90% | 5001 | 5067 | 0.987 |
| Example 6 | 91 | 83% | 74% | 74% | 87% | 5003 | 5069 | 0.987 |
| Example 7 | 93 | 83% | 74% | 73% | 86% | 4899 | 4969 | 0.986 |
| Example 8 | 87 | 84% | 76% | 78% | 88% | 5007 | 5073 | 0.987 |
| Example 9 | 90 | 85% | 74% | 77% | 87% | 4998 | 5074 | 0.985 |
| Example 10 | 88 | 85% | 76% | 79% | 88% | 4996 | 5067 | 0.986 |
| Example 11 | 93 | 84% | 75% | 77% | 90% | 5001 | 5077 | 0.985 |
| Comparative Example 1 | 102 | 80% | 70% | 71% | 80% | 5000 | 5102 | 0.980 |
| Comparative Example 2 | 99 | 81% | 69% | 71% | 81% | 4995 | 5092 | 0.981 |
| Comparative Example 3 | 98 | 81% | 70% | 70% | 81% | 4998 | 5095 | 0.981 |
| Comparative Example 4 | 96 | 81% | 71% | 73% | 83% | 4977 | 5013 | 0.992 |
| Comparative Example 5 | 94 | 82% | 72% | 74% | 82% | 5026 | 5089 | 0.988 |

It can be seen from the foregoing comparative examples and examples that as compared with the negative electrode active material without the hard carbon material, the negative electrode with the hard carbon and the graphite as the negative electrode active material can significantly reduce the impedance of the lithium-ion battery and significantly improve the rate performance and cycling performance of the lithium-ion battery. In addition, when a ratio (W₁/W₂) of W₁ of the mass of element hydrogen to the mass of element carbon in the hard carbon to W₂ of the mass of element hydrogen to the mass of element carbon in the graphite is within a range of 5 to 19, the impedance of the lithium-ion battery can be significantly reduced, and the rate performance and cycling performance of the lithium-ion battery can be significantly improved.

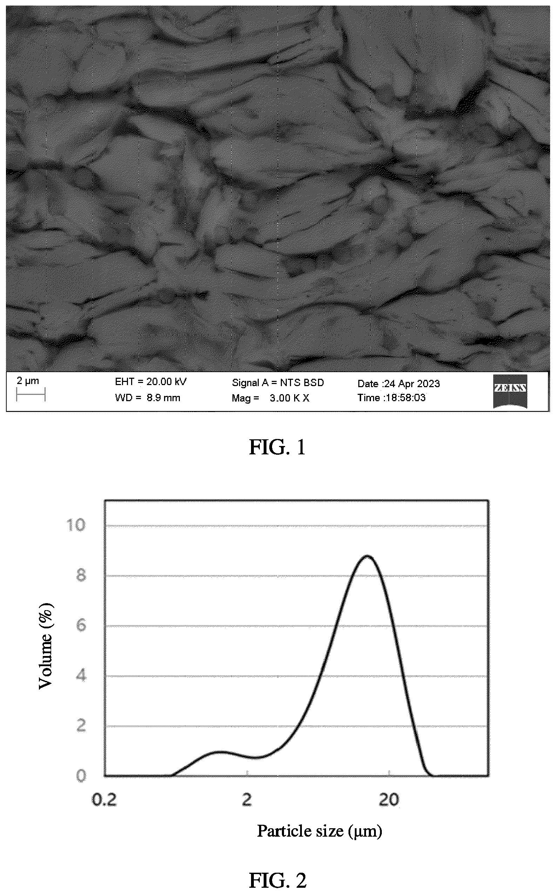

FIG. 1 is a scanning electron microscope (SEM) image of a cross section of a negative electrode in Example 6. It can be seen that the negative electrode includes flake graphite and spherical hard carbon, and the hard carbon was evenly dispersed in gaps of the graphite. FIG. 2 is a particle size distribution curve of a negative electrode active material in Example 6 of this application. It can be seen that the particle size distribution curve has two peaks, where a peak with a smaller particle size represents the hard carbon, and a peak with a larger particle size represents the graphite.

Moreover, when the parameters such as W₁/W₂, d₁, d₂, ID/IG, D₁ᵥ50, D₂ᵥ50, D₁ᵥ90, D₂ᵥ90, and B/A satisfy specified relations or are within a specified range, the lithium-ion battery has lower impedance and better rate performance and cycling performance.

References to "some embodiments", "some of the embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, specific features, structures, materials, or characteristics herein may be combined in any appropriate manner in one or more embodiments or examples.

Although illustrative embodiments have been demonstrated and described, persons skilled in the art should understand that the foregoing embodiments cannot be construed as limitations on this application, and that these embodiments may be changed, replaced, and modified without departing from the principle, and scope of this application.

## Claims

1. An electrochemical apparatus, comprising a positive electrode, a negative electrode and an electrolyte; the negative electrode, comprising a negative electrode current collector and a negative electrode active material layer located on at least one surface of the negative electrode current collector, **characterized in that**,
the negative electrode active material layer comprises a negative electrode active material, the negative electrode active material comprising graphite and hard carbon, wherein
based on a total mass of the hard carbon, a ratio of a mass of element hydrogen to a mass of element carbon in the hard carbon is W₁,
based on a total mass of the graphite, a ratio of a mass of element hydrogen to a mass of element carbon in the graphite is W₂, and
W₁/W₂ is within a range of 5 to 19.

2. The electrochemical apparatus according to claim 1, **characterized in that**, a compacted density of the hard carbon is d₁ g/cm³, and a compacted density of the graphite is d₂ g/cm³, d₁/d₂ being within a range of 0.38 to 0.55.

3. The electrochemical apparatus according to claim 2, **characterized in that**, d₁ is 0.7 to 1.2.

4. The electrochemical apparatus according to claim 2 or 3, **characterized in that**, d₂ is 1.8 to 2.0.

5. The electrochemical apparatus according to any one of claims 1 to 4, **characterized in that**, W₁/W₂ is within a range of 8 to 18.6.

6. The electrochemical apparatus according to any one of claims 1 to 5, **characterized in that**, W₁/W₂ is within a range of 12 to 18.

7. The electrochemical apparatus according to any one of claims 1 to 6, **characterized in that**, the negative electrode active material has a peak intensity ID at 1300 cm⁻¹ to 1400 cm⁻¹ and a peak intensity IG at 1530 cm⁻¹ to 1630 cm⁻¹, a value of ID/IG being within a range of 0.2 to 0.5.

8. The electrochemical apparatus according to any one of claims 1 to 7, **characterized in that**, D₂ᵥ50 of the graphite and D₁ᵥ50 of the hard carbon satisfy D₂ᵥ50/D₁ᵥ50 ≥ 4.5.

9. The electrochemical apparatus according to any one of claims 1 to 8, **characterized in that**, D₁ᵥ50 of the hard carbon and D₁ᵥ90 of the hard carbon satisfy 1.5 < D₁ᵥ90/D₁ᵥ50 < 6.

10. The electrochemical apparatus according to any one of claims 1 to 9, **characterized in that**, D₂ᵥ50 of the graphite and D₂ᵥ90 of the graphite satisfy D₂ᵥ90/D₂ᵥ50 > 1.5.

11. The electrochemical apparatus according to any one of claims 1 to 10, **characterized in that**, the graphite and the hard carbon satisfy at least one of the following conditions:
(1) D₁ᵥ50 of the hard carbon is 0.1 µm to 3 µm;
(2) D₂ᵥ50 of the graphite is 7 µm to 20 µm;
(3) a specific surface area of the hard carbon is within a range of 5 m²/g to 30 m²/g; or
(4) based on a total mass of the negative electrode active material, a mass percentage of the hard carbon is 1% to 10%.

12. The electrochemical apparatus according to any one of claims 1 to 11, **characterized in that**, in a particle size distribution curve, the negative electrode active material has a peak intensity A within a range of 0.5 µm to 2 µm and a peak intensity B within a range of 8 µm to 17 µm, B/A being not less than 15.

13. The electrochemical apparatus according to any one of claims 1 to 12, **characterized in that**, Wi is within a range of 0.05 to 0.2.

14. The electrochemical apparatus according to any one of claims 1 to 13, **characterized in that**, W₂ is within a range of 0.005 to 0.02.

15. An electronic apparatus, comprising the electrochemical apparatus according to any one of claims 1 to 14.
